# EUROPÄISCHE PATENTANMELDUNG

(11) **EP 0 659 457 A1**
(43) Veröffentlichungstag der Anmeldung: **28.06.1995**
(21) Anmeldenummer: 94119727.9
(22) Anmeldetag: 14.12.1994
(51) Int. Cl.: B01D 17/00, B01D 17/025, B01D 17/032, B01D 17/12, E03F 7/10

(54) **Aufbereitungsanlage für 3-Phasen-Gemische und Betriebsverfahren hierfür**

(30) Priorität: 25.12.1993 DE 4344352
(71) Anmelder: KROLL FAHRZEUGBAU GmbH, D-46485 Wesel (DE); NORDDEUTSCHE-FILTER-VERTRIEBS GMBH, 22419 Hamburg (DE)
(72) Erfinder: Rothkegel, Dipl.-Ing. Roland, D-46562 Voerde-Spellen (DE); Tomaschewski, Karl-Heinz, D-86465 Heretsried (DE); Hofacker, Karl-Heinz, D-46485 Wesel (DE); Runge, Eberhard, D-22455 Hamburg (DE); Franken, Dipl.-Ing. Heinz, D-50354 Hürth (DE)
(74) Vertreter: Zapfe, Hans, Dipl.-Ing.

(57) **Zusammenfassung**

Ein Aufbereitungsfahrzeug für die Trennung von 3-Phasen-Gemischen aus Wasser, Leichtstoffen und Schwerstoffen besitzt einen Druckbehälter (2) mit einer Hauptkammer (5), in der sich eine Trennvorrichtung (10) für die gravimetrische Abtrennung der Leichtstoffe vom Wasser befindet, mit einer Leichtstoffkammer (29) und eine Wasserkammer (27) sowie Förderleitungen (40, 43) für die Zufuhr der jeweils abgetrennten Phase zur vorgesehenen Kammer. Für die Ansaugung der 2- und 3-Phasen-Gemische sind Ansaugleitungen (36, 61) vorgesehen. Mindestens ein Teil der Kammern ist mit verschließbaren Auslaßöffnungen (47, 51, 57) versehen. Zur Verbesserung des Trenneffekts ist die Trennvorrichtung (10) als 3-Phasen-Trennvorrichtung ausgebildet, mit einem Überlauf (11) für die Leichtstoffe, mit einem Wasserauslaß (12) und mit mindestens einem steuerbaren Bodenauslaß (14) für Schwerstoffe versehen und innerhalb der Hauptkammer (5) angeordnet. Unterhalb der 3-Phasen-Trennvorrichtung (10) ist ein Sammelraum für die Schwerstoffe vorhanden. Dabei werden die Schwerstoffe aus der 3-Phasen-Trennvorrichtung (10) in den Sammelraum für die Schwerstoffe abgelassen. Vorzugsweise ist dieser durch mindestens eine Trennwand (6a, 6b) in einen Sandbereich (8) und einen Schlammbereich (9) unterteilt.

## Beschreibung

Die Erfindung betrifft eine Aufbereitungsanlage, insbesondere als Fahrzeug, für die Trennung von 3-Phasen-Gemischen aus Wasser, Leichtstoffen (leichter als Wasser) und Schwerstoffen (schwerer als Wasser) mit einem Druckbehälter, in dem eine Hauptkammer für die zumindest vorübergehende Aufnahme des 3-Phasen-Gemischs angeordnet ist, mit einer Trennvorrichtung für die gravimetrische Abtrennung der Leichtstoffe vom Wasser, mit einer Leichtstoffkammer für die Aufnahme der abgetrennten Leichtstoffe und mit einer Wasserkammer für die Aufnahme des verbliebenen Wassers, sowie mit Förderleitungen für die Zufuhr der jeweils abgetrennten Phase zur vorgesehenen Kammer und mit mindestens einer Ansaugleitung für Leichtstoff/Wasser- und/oder Leichtstoff/Wasser/Schwerstoff-Gemische, wobei mindestens ein Teil der Kammern mit verschließbaren Auslaßöffnungen versehen ist.

Bei einer derartigen, durch die EP-PS 365 513 bekannten Aufbereitungsanlage, die als Kesselfahrzeug ausgeführt ist, besteht der als Druckbehälter ausgebildete Kessel aus drei Kammern, von denen die hinterste die Schlammkammer ist, die mittlere die Wasserkammer und die vordere Kammer die Ölkammer. Ein Ölabscheider, der eine 2-Phasen-Trennvorrichtung darstellt, ist zwischen dem Kessel und dem Fahrerhaus des Fahrzeugs angeordnet. Die Schlammkammer ist durch eine teildurchlässige Trennwand, die die Funktion eines verschiebbaren Kolbens hat, in einen Schlammraum und in einen Wasserraum unterteilt. In dem in Fahrtrichtung vor der teildurchlässigen Trennwand gelegenen Wasserraum ist zusätzlich ein Spaltfilter angeordnet, so daß im Wasserraum Fest- oder Schwerstoffe abgelagert werden, die jedenfalls nicht ohne weiteres, insbesondere aber nicht durch das Verschieben der teildurchlässigen Trennwand aus der Schlammkammer entfernt werden können. Mit der bekannten Aufbereitungsanlage ist es jedenfalls nicht möglich, eine sehr weitgehende Trennung von 3-Phasen-Gemischen zu erreichen, von denen jede Phase nur noch einen vernachlässigbaren Anteil der jeweils anderen Phasen enthält. Außerdem geht durch die Anordnung des Ölabscheiders zwischen Kessel und Fahrerhaus ein nicht unbeträchtlicher Teil der zulässigen Gesamtlänge des Fahrzeugs verloren, da der Ölabscheider nur eine ungenügende Raumausnutzung ermöglicht. Weiterhin dient der Ölabscheider nicht dazu, zusätzliche Fest- oder Schwerstoffe abzuscheiden, die von dem Filter durchgelassen werden, und es sind infolgedessen auch keine Mittel dafür vorgesehen, etwa mitgeschleppte Fest- oder Schwerstoffe in den Schlammraum zurückzufördern. Sollten alternativ 3-Phasen-Gemische, die aus Wasser, Öl- und Feststoffteilchen bestehen, und 2-Phasen-Gemische, die lediglich aus Wasser und Öl bestehen, angesaugt und aufgearbeitet werden, so ist eine Umrüstung des Fahrzeugs durch zusätzliches Anschließen von Saugschläuchen erforderlich.

Durch die DE 42 08 506 A1 und das DE 93 03 565 U, ist es weiterhin bekannt, Ölabscheidern, die gleichfalls außerhalb eines Hauptbehälters angeordnet sind, externe Filter für Feststoffe vorzuschalten, die bei großen Anteilen von Feststoffen in kurzen Zeitabständen nach außen entleert werden müssen, um einen Betrieb aufrecht erhalten zu können.

Der Erfindung liegt daher die Aufgabe zugrunde, eine Aufbereitungsanlage der eingangs beschriebenen Gattung anzugeben, in der eine äußerst weitgehende Trennung von 3-Phasen-Gemischen in die einzelnen Phasen durchgeführt werden kann, wobei jede dieser Phasen mit vernachlässigbarem Anteil der jeweils anderen Phasen verunreinigt ist. Insbesondere soll es dabei möglich sein, das 3-Phasen-Gemisch oder restliche Gemische aus drei Phasen gegebenenfalls mehrfach durch die Aufbereitungsanlage zu fördern und schließlich soll der Betrieb einer solchen Aufbereitungsanlage ohne Umrüsten auf andere Schlauchanschlüsse möglich sein.

Die Lösung der gestellten Aufgabe erfolgt bei der eingangs beschriebenen Aufbereitungsanlage erfindungsgemäß dadurch, daß die Trennvorrichtung als 3-Phasen-Trennvorrichtung ausgebildet, mit einem Überlauf für Leichtstoffe, mit einem Wasserauslaß und mit mindestens einem steuerbaren Bodenauslaß für Schwerstoffe versehen und innerhalb der Hauptkammer zumindest teilweise oberhalb von deren Längsachse angeordnet ist, und daß unterhalb der 3-Phasen-Trennvorrichtung ein Sammelraum für Schwerstoffe vorhanden ist.

Durch die Ausbildung der Trennvorrichtung als 3-Phasen-Trennvorrichtung mit mindestens einem steuerbaren Bodenauslaß und durch die Unterbringung dieser 3-Phasen-Trennvorrichtung innerhalb der Hauptkammer ist es möglich, in der Trennvorrichtung außer einer Abscheidung von Leichtstoffen wie Ölen auch eine zusätzliche Abscheidung etwa mitgeführter Schwerstoffe, z.B. von Feststoffpartikeln, durchzuführen, die alsdann durch den mindestens einen Bodenauslaß gesteuert nach unten abgelassen werden können, wo sie im Sammelraum für Schwerstoffe landen.

Durch diese integrierte Bauweise kann bei vorgegebener Gesamtlänge der Aufbereitungsanlage eine sehr viel bessere Raumausnutzung erfolgen, und es ist beispielsweise nicht erforderlich, die 3-Phasen-Trennvorrichtung zum Zwecke eines Austragens abgesetzter Fest- oder Schwerstoffe zu öffnen. Die zuverlässige Wirkungsweise der 3-Phasen-Trennvorrichtung ist also beispielsweise nicht von der zuverlässigen Wirkung eines vorgeschalteten Filters abhängig, der dann seinerseits wieder in Intervallen einem Reinigungsprozeß unterzogen werden müßte. Der Erfindungsgegenstand ermöglicht es insbesondere, 3-Phasen-Gemische mit abnehmenden Anteilen an Leicht- und Schwerstoffen auch mehrfach durch die 3-Phasen-Trennvorrichtung hindurchzuführen, um dadurch den Wirkungsgrad der gesamten Aufbereitungsanlage zu verbessern.

Die Aufbereitungsanlage kann infolgedessen so wirksam betrieben werden, daß ausschließlich noch die Leichtstoffe einerseits und die Schwerstoffe andererseits zu einem Entsorgungsbetrieb transportiert werden müssen, während die extrem weitgehend von Leicht- und Schwerstoffen befreite wässrige Phase am Ort der Aufbereitung zurückbleiben kann, wo sie beispielsweise wieder zur Füllung von gereinigten Sammelbehältern verwendet werden kann, ohne daß zusätzlich Frischwasser benötigt würde. Dadurch werden im Falle der Anordnung der Anlage auf einem Fahrzeug unnütze Leerfahrten zumindest weitgehend vermieden.

Es ist dabei besonders vorteilhaft, wenn die Hauptkammer in Richtung ihrer Längsachse durch eine weitere Trennvorrichtung unterteilt ist, zwischen welcher und einem Deckel der Sammelraum für die Schwerstoffe gebildet ist. Diese Trennvorrichtung kann bei einer zylindrischen Hauptkammer durch eine oder mehrere Trennwände gebildet sein, die entsprechend dem Innendurchmesser des Mantels der Hauptkammer als Kreisscheiben-Segmente ausgebildet sind, die mindestens die untere Hälfte des Innenquerschnitts der Hauptkammer bis unmittelbar unter die 3-Phasen-Trennvorrichtung ausfüllen.

Die mindestens eine Trennwand kann dabei innerhalb ihrer Umrißlinie alternativ
a) undurchlässig sein
   oder
b) in Form eines Siebes teildurchlässig sein, um von den Schwerstoffen zusammen mit Wasser nur die feinsten Feststoffteilchen durchzulassen, die mit dem Wasser einen Schlamm bilden, wodurch die Hauptkammer in einen Sandbereich und einen Schlammbereich unterteilt wird.

Die Schwerstoffe sammeln sich dabei zumindest überwiegend in dem besagten Sammelraum, der zwischen der Trennvorrichtung und dem Deckel gebildet und als Sandbereich bezeichnet wird. In beiden Fällen kann die mindestens eine Trennwand als eine Art Schleppkolben ausgebildet sein und mittels eines Antriebselements in an sich bekannter Weise zum Ausschub der weitgehend entwässerten Schwerstoffe nach dem Öffnen des Deckels der Hauptkammer dienen.

Da die Abdichtung der Trennvorrichtung gegenüber dem Mantel der Hauptkammer in der Regel nicht absolut ist, treten Wasser und feine Feststoffteilchen auf die andere Seite der Trennvorrichtung, d.h. in den sogenannten Schlammbereich, über. Um auch den Schlammbereich entleeren zu können, sind die Trennwände in diesem Fall in ihrem unteren Bereich mit je einer Trennfuge und Scharnieren versehen, so daß ein Durchtritt herausgespülter Feststoffteilchen in Richtung auf die vom Deckel freigegebene Entleerungsöffnung der Hauptkammer möglich ist.

Es ist weiterhin besonders vorteilhaft, wenn der Inhalt des Sumpfes der Hauptkammer, also der sogenannten Sand- und Schlammbereich, keinen Zugang zur 3-Phasen-Trennvorrichtung hat. Dies kann dadurch herbeigeführt werden, daß die Hauptkammer entweder keinen Bodenauslaß hat oder daß dieser bei der Aufarbeitung des 3-Phasengemisch geschlossen gehalten wird. Die flüssige Phase wird also im Falle eines Kreislaufs nicht durch den besagten Sumpf geführt. Falls also im Sand oder Schlamm des Sumpfes giftige Schwermetalle oder deren Verbindungen enthalten sein sollten, können diese nicht von der flüssigen Phase aufgenommen werden. Der Sandbereich des Sumpfes wird also nur entweder direkt über die Saugleitung großen Querschnitts oder indirekt über die Bodenauslässe der 3-Phasen-Trennvorrichtung beschickt. Nach entsprechender Füllung der Hauptkammer wird deren Inhalt dann getrennt aufgearbeitet oder entsorgt.

Es ist dabei im Zuge einer weiteren Ausgestaltung der Erfindung besonders vorteilhaft, wenn der mindestens eine Bodenauslaß der 3-Phasen-Trennvorrichtung ausschließlich oberhalb des Sandbereichs der Hauptkammer angeordnet ist. Auf diese Weise wird es vermieden, daß über den besagten Bodenauslaß feine und feinste Schwerstoffe unmittelbar in den Schlammbereich der Hauptkammer gelangen, der sich jenseits der Trennwand befindet. Infolgedessen wird zumindest der allergrößte Teil der feinen und feinsten Schwerstoffe zusammen mit den im Sandbereich abgelagerten Schwerstoffen aus der Anlage entfernt.

Das Antriebselement für den Schleppkolben kann dabei ein Hydraulikkolben mit einer Kolbenstange sein, an der die mindestens eine Trennwand befestigt ist. Es ist aber besonders vorteilhaft, wenn das Antriebselement für den Schleppkolben eine Zugstange ist, die mit dem Deckel der Hauptkammer verbunden ist. Auf diese Weise ist es möglich, durch die Öffnungsbewegung des Deckels die Trennvorrichtung bzw. den Schleppkolben in Richtung auf die Entleerungsöffnung zu bewegen und hierbei den Schwerstoffinhalt des Sandbereichs und gegebenenfalls des Schlammbereichs aus der Hauptkammer auszutragen.

Es ist dabei wiederum im Zuge einer weiteren Ausgestaltung der Erfindung von besonderem Vorteil, wenn die 3-Phasen-Trennvorrichtung aus einer in Richtung der Längsachse A-A ausgerichteten Reihenanordnung von quaderförmigen Trennkammern besteht, in denen Pakete V-förmiger Trennelemente angeordnet sind, deren mit Durchbrechungen versehene waagrecht verlaufende Scheitellinien nach oben gerichtet sind, und wenn zumindest der überwiegende Teil der Trennkammern mit einem verschließbaren Bodenauslaß versehen ist. Auf diese Weise ist es möglich, im Bodenbereich der Trennkammern über eine gewisse Zeit Schwerstoffpartikel anzusammeln, die durch ein kurzzeitiges Öffnen der Bodenauslässe entfernt werden können. Zu diesem Zweck sind die Bodenauslässe der Trennkammern mit steuerbaren Absperrvorrichtungen versehen. Wenn die Bodenauslässe kurzzeitig geöffnet werden, sinken die Feststoffe nach unten in den Sandbereich der Hauptkammer, ohne daß der Flüssigkeitsspiegel in den einzelnen Trennkammern unzulässig absinken würde. Zum Zwecke einer zuverlässigen Wirkungsweise der 3-Phasen-Trennvorrichtung ist es nämlich erforderlich, in dieser einen Füllstand aufrecht zu erhalten, der nicht unterschritten werden soll.

Es ist schließlich weiterhin von Vorteil, wenn die 3-Phasen-Trennvorrichtung aus der Hauptkammer herausziehbar an Führungsschienen aufgehängt ist, die sich im oberen Bereich der Hauptkammer parallel zu deren Längsachse erstrecken.

Auf diese Weise läßt sich die 3-Phasen-Trennvorrichtung bei geöffnetem Deckel gewissermaßen wie eine Schublade aus der Hauptkammer herausziehen, inspizieren und gegebenenfalls reinigen, warten oder instandsetzen.

Es ist weiterhin möglich, im Schlammbereich der Hauptkammer in Strömungsrichtung jenseits der letzten Trennwand eine verschließbare Bodenöffnung anzuordnen, die über eine Förderleitung und eine Pumpe mit der Eintrittsöffnung der 3-Phasen-Trennvorrichtung verbunden ist.

Auf diese Weise lassen sich feinste Schwerstoffpartikel, die in den Schlammbereich übergetreten sind, zusammen mit der mindestens einen flüssigen Phase in die 3-Phasen-Trennvorrichtung befördern, in der sie sich absetzen und auf die bereits beschriebene Weise durch die steuerbaren Bodenauslässe in den Sandbereich der Hauptkammer abgelassen werden können.

Es ist schließlich wiederum von Vorteil, wenn der Wasserauslaß der 3-Phasen-Trennvorrichtung durch eine Umschalt-Ventilanordnung und zugehörige Förderleitungen wahlweise mit der Wasserkammer oder über eine Pumpe mit der Eintrittsöffnung der 3-Phasen-Trennvorrichtung verbindbar ist.

Unterschreitet in diesem Falle der Leichtstoffanteil einen beispielsweise durch gesetzliche Bestimmungen vorgegebenen Grenzwert, so kann das Wasser ohne weiteres der Wasserkammer zugeführt werden. Überschreitet der Gehalt an Leichtstoffen den vorgeschriebenen Grenzwert, so kann die flüssige Phase gegebenenfalls erneut der Eintrittsöffnung der 3-Phasen-Trennvorrichtung zugeführt werden, so daß eine Abscheidung weiterer Anteile an Leichtstoffen bewirkt wird.

Um hier eine Automatisierung des Vorgangs, insbesondere aber eine Überwachung, zu ermöglichen, ist es besonders vorteilhaft, wenn der Umschalt-Ventilanordnung eine Meßvorrichtung für den Leichtstoffgehalt im Wasser vorgeschaltet ist, durch die die Ventile in dem Sinne steuerbar sind, daß beim Unterschreiten eines vorgebbaren Grenzwerts für den Leichtstoffanteil das Wasser der Wasserkammer und beim Überschreiten des Grenzwertes erneut der 3-Phasen-Trennvorrichtung zugeführt wird.

Vorzugsweise besitzt die erfindungsgemäße Aufbereitungsanlage zwei Ansaugleitungen, nämlich eine als Saugrüssel ausgebildete erste Ansaugleitung mit einem Nenndurchmesser von beispielsweise 100 mm, die über dem Sammelraum für Schwerstoffe an die Hauptkammer angeschlossen ist, sowie eine zweite Ansaugleitung, beispielsweise mit einem Nenndurchmesser von 50 mm, die an eine Pumpe angeschlossen ist, deren Druckseite über eine Förderleitung unmittelbar mit der Eintrittsöffnung der 3-Phasen-Trennvorrichtung verbunden ist.

Hierdurch ist es möglich, das 3-Phasen-Gemisch je nach dem Gehalt und der Partikelgröße der Fest- bzw. Schwerstoffe wahlweise dem Sandbereich der Hauptkammer zuzuführen oder der 3-Phasen-Trennvorrichtung.

Es ist im Zuge einer wiederum weiteren Ausgestaltung der Erfindung besonders vorteilhaft, wenn dem Druckbehälter eine Ölschlamm-Sammelkammer zugeordnet ist, in die eine absperrbare Zweigleitung der ersten Ansaugleitung einmündet.

Bei diesem Ölschlamm handelt es sich beispielsweise um eine geleeartige, wasserhaltige Masse, die nur äußerst schwer in eine Wasserphase und eine Ölphase getrennt werden kann. In der Ölschlamm-Sammelkammer kann man dieses Gemisch für einige Zeit abstehen lassen und alsdann durch eine entsprechende Leitungsführung außerhalb der Haupt-Betriebszeiten der Aufbereitungsanlage abarbeiten.

Dies kann vorzugsweise dadurch geschehen, daß die Ölschlamm-Sammelkammer eine verschließbare Bodenöffnung aufweist, die über eine Förderleitung und eine Pumpe mit der Eintrittsöffnung der 3-Phasen-Trennvorrichtung verbunden ist.

Weitere vorteilhafte Ausgestaltungen der Aufbereitungsanlage ergeben sich aus den übrigen Unteransprüchen.

Die Erfindung betrifft auch ein Betriebsverfahren für eine derartige Aufbereitungsanlage in Verbindung mit der Entsorgung des Inhalts von ortsfesten Abscheideanlagen, die als Sandfang in Kombination mit einem Öl-/Benzinabscheider mit Schlammfang ausgebildet sind. Derartige ortsfeste Abscheideanlagen, von denen eine in der Detailbeschreibung näher erläutert wird, befinden sich beispielsweise in Tankstellenbetrieben, in denen bekanntlich außer Ölen und Fetten auch sandhaltige Materialien anfallen, die nicht nur von Waschvorgängen an Fahrzeugen herrühren können, sondern auch von Obenlächenverunreinigungen auf Freiflächen des Betriebsgeländes.

Zum Zwecke einer Entsorgung des Inhalts derartiger ortsfester Abscheideanlagen ist es besonders vorteilhaft, wenn man
a) die Leichtstoffe aus dem Öl-/Benzinabscheider mittels der Pumpe über die zweite Ansaugleitung absaugt, der 3-Phasen-Trennvorrichtung zuführt und die Leichtstoffe der Leichtstoffkammer und das Wasser der Wasserkammer zuführt,
b) anschließend die wässrige Phase aus dem Öl-/Bezinabscheider mittels der Pumpe über die zweite Ansaugleitung absaugt, der 3-Phasen-Trennvorrichtung zuführt und die Leichtstoffe der Leichtstoffkammer und das Wasser der Wasserkammer zuführt,
c) anschließend den Ölschlamm aus dem Öl-/Benzinabscheider mittels Unterdruck in der Hauptkammer und mittels der ersten Ansaugleitung und der Zweigleitung der Ölschlamm-Sammelkammer zuführt,
d) den Öl-/Benzinabscheider mittels einer Hochdruckpumpe und Wasser aus der Wasserkammer reinigt,
e) anschließend das verunreinigte Reinigungswasser aus Verfahrensschritt d) mittels der Pumpe über die zweite Ansaugleitung der 3-Phasen-Trennvorrichtung zuführt und die Leichtstoffe in die Leichtstoffkammer, das Wasser in die Wasserkammer und die Schwerstoffe über die Bodenauslässe der Hauptkammer zuführt,
f) den Öl-/Benzinabscheider mittels des weitgehend leichtstoff-freien Wassers aus der Wasserkammer mindestens teilweise wieder auffüllt,
g) anschließend die wässrige Phase aus dem Sandfang mittels der Pumpe über die zweite Ansaugleitung absaugt, der 3-Phasen-Trennvorrichtung zuführt und die Leichtstoffe der Leichtstoffkammer, das Wasser über die Wasserkammer zurück zum Öl-/Benzinabscheider und die in der 3-Phasen-Trennvorrichtung abgeschiedenen Schwerstoffe über Bodenauslässe der Hauptkammer zuführt,
h) Schwerstoffe aus dem Sandfang mittels Unterdruck in der Hauptkammer und mittels der ersten Ansaugleitung der Hauptkammer zuführt,
i) den Sandfang mittels der Hochdruckpumpe und Wasser aus der Wasserkammer reinigt,
j) anschließend das mit Sand und Sandschlamm verunreinigte Reinigungswasser aus Verfahrensschritt i) mittels Unterdruck in der Hauptkammer und mittels der ersten Ansaugleitung in den Sandbereich der Hauptkammer einbringt,
k) wobei beim Unterschreiten eines vorgegebenen Grenzwertes für den Leichtstoffanteil im Wasser dieses Wasser unmittelbar der Wasserkammer zugeführt wird, und bei Überschreiten dieses Grenzwertes das Wasser erneut und gegebenenfalls wiederholt der 3-Phasen-Trennvorrichtung zugeführt wird, bis der besagte Grenzwert schließlich unterschritten wird.

Ein Ausführungsbeispiel des Erfindungsgegenstandes und seine Wirkungsweise werden nachfolgend anhand der Figuren 1 bis 8 näher erläutert.

Es zeigen:
- Figur 1: einen Axialschnitt durch den Druckbehälter und die in deren Hauptkammer eingeschobene 3-Phasen-Trennvorrichtung mit schematisch dargestellter Leitungsführung,
- Figur 2: in vergrößertem Maßstab einen Ausschnitt aus demjenigen Teil der Hauptkammer, in dem sich die 3-Phasen-Trennvorrichtung befindet,
- Figur 3: in wiederum vergrößertem Maßstab eine Draufsicht von oben auf die 3-Phasen-Trennvorrichtung,
- Figur 4: eine perspektivische Darstellung zweier Pakete V-förmiger Trennelemente, von denen eine Vielzahl in der 3-Phasen-Trennvorrichtung nach Figur 3 angeordnet ist,
- Figur 5: einen teilweisen Radialschnitt durch den Gegenstand von Figur 2 entlang der Linie V-V in wiederum vergrößertem Maßstab,
- Figur 6: einen teilweisen Radialschnitt entlang der Linie VI-VI durch den Gegenstand von Figur 2 im gleichen Maßstab wie Figur 5,
- Figur 7: das Ende der Hauptkammer bei geöffnetem Deckel, und
- Figur 8: eine Prinzipdarstellung einer ortsfesten Abscheideanlage, wie sie beispielhaft in Tankstellenbetrieben verwendet wird.

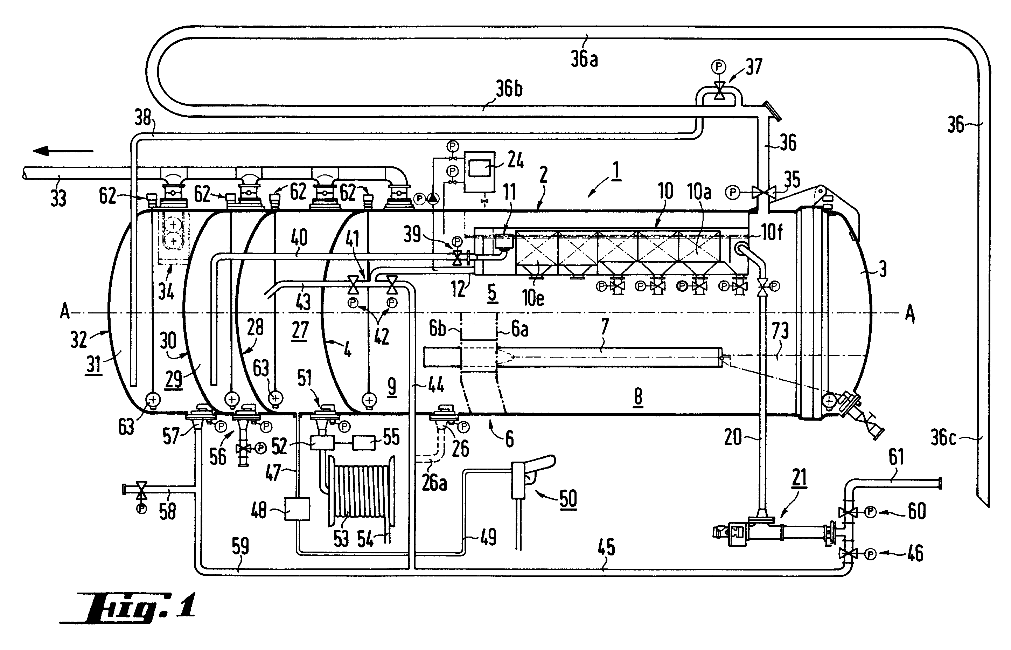

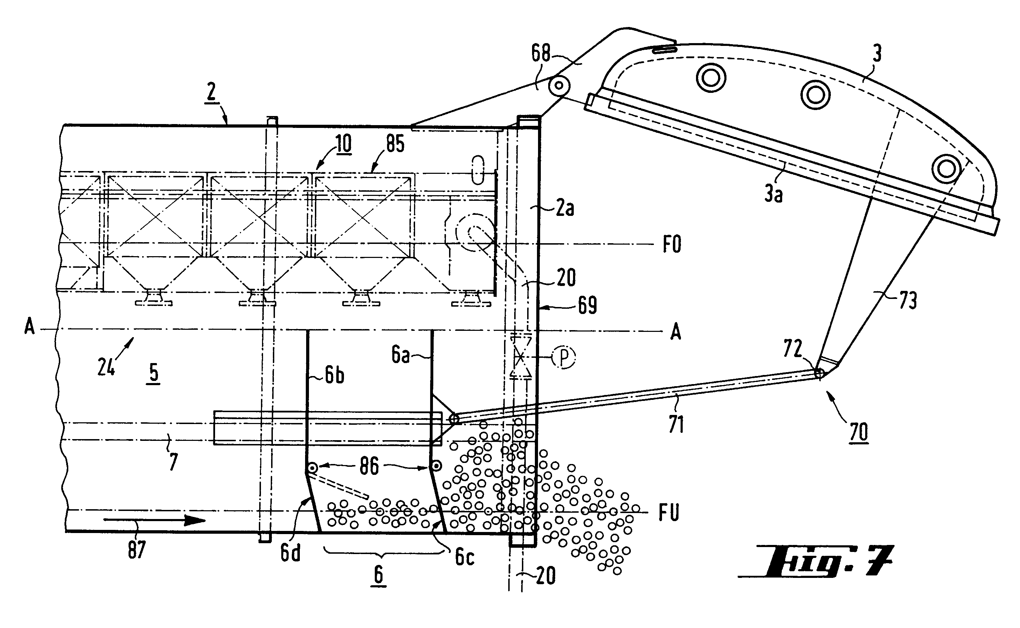

In Figur 1 ist eine Aufbereitungsanlage 1 dargestellt, deren wesentlicher Teil ein Druckbehälter 2 mit einem zylindrischen Mantel ist. In diesem Druckbehälter 2 wird zwischen einem Deckel 3 und einem Klöpper-Boden 4 eine Hauptkammer 5 gebildet, in der sich unterhalb der Längsachse A-A eine erste Trennvorrichtung 6 befindet, die aus zwei, im wesentlichen senkrechten Trennwänden 6a und 6b besteht, die mit Abstand voneinander baulich vereinigt und an einer Parallelführung 7 in Richtung der Längsachse A-A verschiebbar geführt sind. Auf Einzelheiten dieser Führung wird im Zusammenhang mit Figur 7 noch näher eingegangen werden. Die Trennwände 6a und 6b können - wie gezeichnet - teildurchlässig sein, müssen dies aber nicht sein, sondern können auch geschlossen ausgeführt sein.

Die Trennwände 6a und 6b sind in der Draufsicht in Richtung der Längsachse A-A mindestens halbkreisförmig ausgebildet und bilden dadurch eine Art Schleppkolben. Falls erforderlich, kann eine Teildurchlässigkeit der Trennwände 6a und 6b dadurch erreicht werden, daß diese Trennwände mit feinen Durchbrechungen versehen sind, die nach Möglichkeit nur Wasser und allenfalls feinste Feststoffe durchlassen, mittlere und gröbere Feststoffe jedoch zurückhalten. Durch die Wahl der Größe der Durchbrechungen und gegebenenfalls Auflagen von Filtermaterial kann die Durchlässigkeit gezielt beeinflußt werden.

Durch die erste Trennvorrichtung 6 bzw. durch deren Trennwände 6a und 6b wird die Hauptkammer 5 in einen Sandbereich 8 und einen Schlammbereich 9 unterteilt. Falls die Trennwände 6a, 6b geschlossen ausgeführt sind, gelangen in den Schlammbereich 9 nur noch sehr geringe Mengen von feinsten Feststoffteilchen.

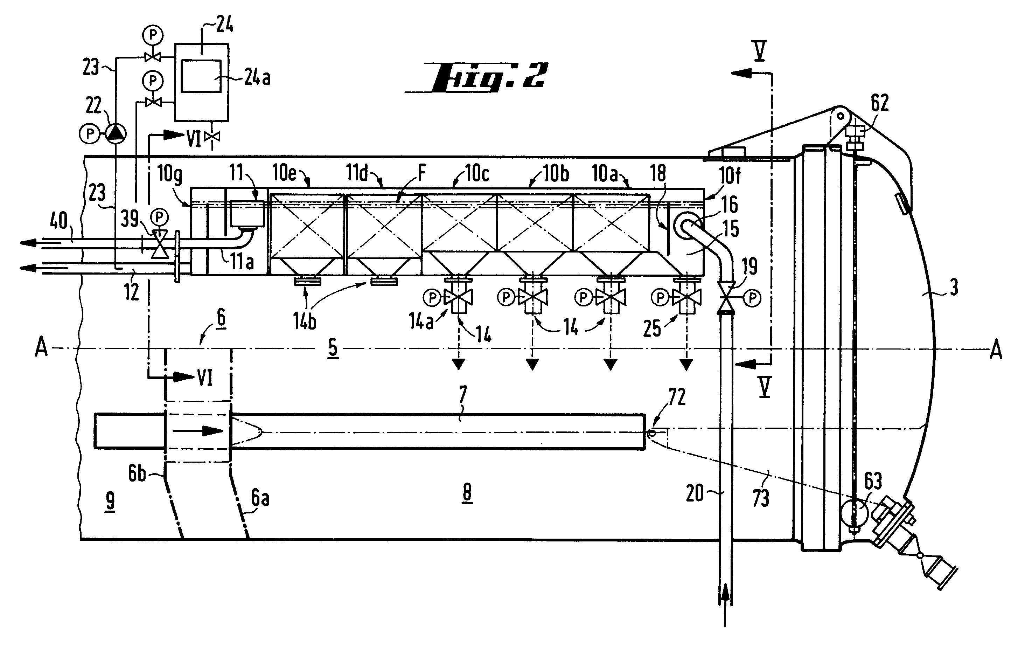

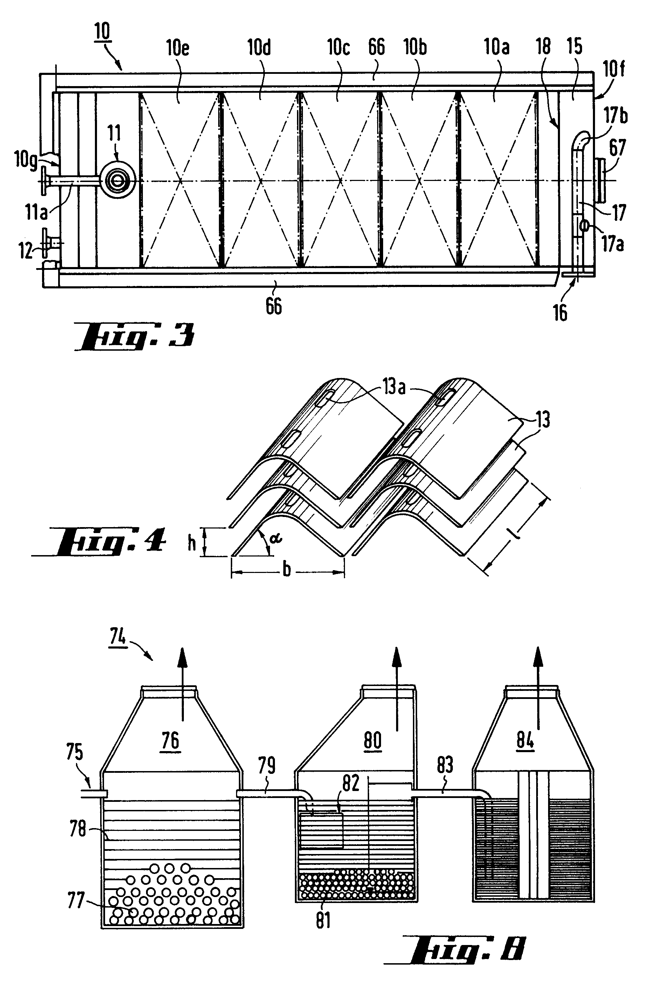

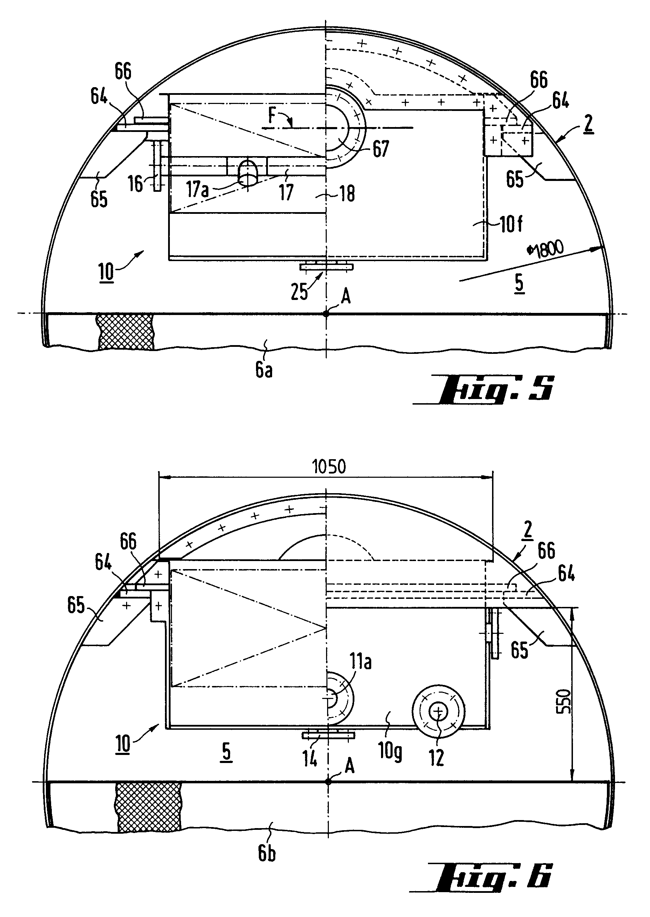

Oberhalb der Längsachse A-A befindet sich eine zweite Trennvorrichtung 10, die als 3-Phasen-Trennvorrichtung ausgebildet und mit einem Überlauf 11 für Leichtstoffe (Öle, Kohlenwasserstoffe) und mit einem Wasserauslaß 12 versehen ist. Die 3-Phasen-Trennvorrichtung besteht aus einer Reihenanordnung von quaderförmigen Trennkammern 10a bis 10e, in denen Pakete V-förmiger Trennelemente 13 angeordnet sind, wie sie in Figur 4 perspektivisch dargestellt sind. Die Trennkammern besitzen keine Zwischenwände, sind also in Strömungsrichtung durchgehend, an den Enden aber mit Stirnwänden 10f und 10g versehen.

Die Länge I der Trennelemente 13 entspricht den Innenabmessungen der Trennkammern, quer zur Strömungsrichtung gesehen. Durch Wahl der Basisbreite b und des Winkels α in Verbindung mit dem Höhenabstand h hat man es in der Hand, den Abscheidegrad an Leichtstoffen gezielt an die physikalischen Kenndaten dieser Leichtstoffe anzupassen.

Phasentrenner mit Einbauten nach Figur 4 sind durch den Prospekt "Platten-Phasen-Trenner PPT" der Firma Norddeutsche-Filter-Vertriebs GmbH in 20357 Hamburg bekannt. Die Erfindung beruht jedoch auf der zusätzlichen Erkenntnis, daß man derartige Phasentrenner auch für Feststoffe als Schwerstoffe verwenden kann, wenn man den Böden der einzelnen Trennkammern eine hierfür geeignete Form (z.B. Pyramidenstumpf) gibt und in den einzelnen Kammern mindestens einen Bodenauslaß vorsieht. Die Trennelemente 13 sind im Bereich ihrer waagrecht verlaufenden Scheitellinien mit Durchbrechungen 13a versehen, durch die die abgetrennten Leichtstoffe über den Füllstand der Wasserphase hinaus aufsteigen können, von wo aus sie waagrecht abströmen, bis sie über den bereits beschriebenen Überlauf 11 und eine Abzugsleitung 11a die 3-Phasen-Trennvorrichtung verlassen.

Wie insbesondere Figur 2 zeigt, sind die in Strömungsrichtung zuerst angeordneten Trennkammern 10a, 10b und 10c mit je einem steuerbaren Bodenauslaß 14 versehen, dessen Unterkante jeweils oberhalb der Längsachse A-A liegt, damit die erste Trennvorrichtung 6 ungehindert unterhalb der Bodenauslässe 14 vorbei bewegt werden kann. Der Überlauf 11 sowie der Wasserauslaß 12 sind am deckelfernen Ende der Trennvorrichtung angeordnet, während am deckelnahen Ende eine Verteilerkammer 15 vorgesehen ist, die eine Eintrittsöffnung 16 aufweist. In der Verteilerkammer 15 befindet sich jenseits der Eintrittsöffnung 16 ein Verteilerrohr 17 mit zwei schräg nach unten gerichteten Austrittsöffnungen 17a und 17b, sowie eine Prallwand 18, durch die eine Strömungsverteilung erzwungen wird. Die 3-Phasen-Trennvorrichtung muß stets mit Flüssigkeit gefüllt sein; der Füllstand "F" ist in Figur 2 angegeben. Die Trennkammern 10d und 10e sind an ihren Böden durch Blindflansche 14b verschlossen und können gegebenenfalls mit Bodenauslässen 14 nachgerüstet werden
Wie aus Figur 2 weiterhin hervorgeht, ist die Eintrittsöffnung 16 über ein Absperr- oder Regelventil 19 mit einer Steigleitung 20 verbunden, die an die Druckseite einer Pumpe 21 angeschlossen ist, die im vorliegenden Fall als Schneckenpumpe bekannter Bauart ausgeführt ist. Weiterhin ist der Wasserauslaß 12 über eine Saugpumpe 22 und eine Probenleitung 23 mit einer Meßvorrichtung 24 verbunden, durch die der Leichtstoffgehalt im Wasser kontinuierlich überwacht werden kann. Die Meßvorrichtung besitzt ein Display 24a, über das der Leichtstoffgehalt im Wasser laufend angezeigt wird. Die Probenmenge wird über eine nicht näher bezeichnete Leitung in die Hauptkammer 5 zurückgeführt. Schließlich ist Figur 2 noch zu entnehmen, daß auch die Verteilerkammer 15 mit einem steuerbaren Bodenauslaß 25 versehen ist, und daß sämtliche Bodenauslässe 14 und 25 oberhalb des durch die erste Trennvorrichtung 6 definierten Sandbereichs 8 angeordnet sind, so daß die aus den Bodenauslässen in Richtung der gestrichtelten Pfeile austretenden Feststoffe, die nur periodisch gesteuert austreten, der bereits im Sandbereich 8 befindlichen Sand- und Schlamm-Masse zugeführt werden, so daß sie mit diesen zusammen auf die anhand von Figur 7 noch zu beschreibende Weise ausgetragen werden können. Die Absperrvorrichtungen 14a sind nur schematisch als pneumatisch gesteuerte Absperrventile angedeutet. Im Schlammbereich 9 der Hauptkammer 5 ist in Strömungsrichtung jenseits der letzten Trennwand 6b eine verschließbare Bodenöffnung 26 angeordnet, auf die insbesondere bei Verwendung geschlossener Trennwände 6a, 6b jedoch verzichtet werden kann, weshalb die Abflußleitung 26a nur gestrichelt dargestellt ist.

Gemäß Figur 1 ist jenseits des Klöpperbodens 4 eine Wasserkammer 27 angeordnet, die bis zu einem weiteren koaxialen Klöpperboden 28 reicht. Der Wasserkammer 27 ist wiederum eine Leichtstoffkammer 29 nachgeordnet, die bis zu einem weiteren Klöpperboden 30 reicht, und an die Leichtstoffkammer 29 schließt sich wiederum eine Ölschlammkammer 31 an, die durch einen letzten Klöpperboden 32 abgeschlossen ist.

Hauptkammer 5, Wasserkammer 27, Leichtstoffkammer 29 und Ölschlamm-Sammelkammer 31 sind an ihrer höchsten Stelle über nicht näher bezeichnete Absperrventile mit einer Saugleitung 33 verbunden, die zu einer nicht dargestellten Vakuumpumpe führt, so daß in den einzelnen Kammern jeweils ein vorgegebener Unterdruck erzeugt werden kann. Den einzelnen Absperrventilen sind noch Rückschlagventile 34 vorgeschaltet, von denen nur eines dargestellt ist, nämlich das in der Ölschlamm-Sammelkammer 31 angeordnete Rückschlagventil 34.

An die Hauptkammer 5 ist über ein Absperrventil 35 eine erste Ansaugleitung 36 angeschlossen, die als sogenannte "Saugrüssel" ausgebildet ist und einen Nenndurchmesser von 100 mm aufweist. Diese Ansaugleitung 36 ist mittels der beiden Schlauchabschnitte 36a und 36b in einer sogenannten Schlauchkassette geführt, die sich auf der Oberseite des Druckbehälters 2 befindet, was jedoch hier nicht gezeigt ist. Das untere Ende 36c ist in denjenigen (ortsfesten) Behälter absenkbar, aus dem das aufzubereitende 3-Phasen-Gemisch abgesaugt wird, das auch gröbere Schwerstoffe bzw. Feststoffe enthält, die der Hauptkammer 5 im Sandbereich 8 zugeführt werden. An die erste Ansaugleitung 36 ist über ein Absperrventil 37 eine Zweigleitung 38 angeschlossen, die einen Nenndurchmesser von 50 mm aufweist und in die Ölschlamm-Sammelkammer 31 mündet. Hierüber werden zähe Ölschlämme gefördert, die im 3-Phasentrenner 10 nicht ohne weiteres von den übrigen Phasen getrennt werden können. Das Ansaugen erfolgt mittels des über die Saugleitung 33 erzeugten Unterdrucks, der in jeder der einzelnen Kammern erzeugt werden kann.

Der Überlauf 11 ist über ein Absperrventil 39 an eine Förderleitung 40 angeschlossen, die gleichfalls einen Nenndurchmesser von 50 mm aufweist und in die Leichtstoffkammer 29 mündet. Der Wasserauslaß 12 führt zu einem T-Stück 41, an dessen beide Austrittsenden zwei Absperrventile angeschlossen sind, die eine Umschalt-Ventilanordnung 42 bilden. Die Steuerung dieser Umschalt-Ventilanordnung 42 erfolgt über nicht gezeichnete Steuerleitungen mittels der Meßvorrichtung 24, durch die der Leichtstoff-Anteil in dem dort vorliegenden 2-Stoffgemisch erfaßt wird. Die Meßvorrichtung arbeitet auf optischer Basis, indem sie durch Lichtbrechung den Trübungsanteil des Probenwassers erfaßt. Die Steuerung erfolgt in der Weise, daß das Wasser beim Unterschreiten eines vorgegebenen Grenzwertes von beispielsweise 20 ppm Leichtstoffgehalt über den Leitungsabschnitt 43 in die Wasserkammer 27 eingeleitet wird. Beim Überschreiten des betreffenden Grenzwertes erfolgt eine Umsteuerung der Ventilanordnung 42, so daß das entsprechend stärker verunreinigte Wasser über einen weiteren Leitungsabschnitt 44 und eine Förderleitung 45 der Saugseite der Pumpe 21 zugeführt wird, vor der sich ein Absperrventil 46 befindet. Auf diese Weise kann die wässrige Phase über die Pumpe 21 und die Steigleitung 20 sowie die 3-Phasen-Trennvorrichtung 10 solange im Kreislauf geführt werden, bis der vorgegebene Grenzwert an Leichtstoffen unterschritten wird. Danach erfolgt wiederum eine Umschaltung der Ventilanordnung 42, so daß das nunmehr hinreichend gereinigte Wasser über den Leitungsabschnitt 43 der Wasserkammer 27 zugeführt wird.

Meßvorrichtungen 24 der beschriebenen Art werden beispielsweise von der Firma DECKMA GmbH vertrieben.

Die Wasserkammer 27 ist über einen ersten Bodenauslaß 47, eine Hochdruckpumpe 48 und eine Druckleitung 49 mit einer Reinigungspistole 50 verbunden, mit der es beispielsweise möglich ist, die zu reinigenden (ortsfesten) Speicherbecken nach dem ersten Absaugen des 3-Phasen-Gemischs zu reinigen, worauf ein erneuter Absaugeprozeß durchgeführt wird.

Die Wasserkammer 27 besitzt einen zweiten Bodenauslaß 51, der über eine weitere Meßvorrichtung 52 zu einer Schlauchhaspel 53 führt, über deren Schlauch 54 das aufbereitete Wasser entweder an die Umwelt, vorzugsweise aber wieder den gereinigten (ortsfesten) Sammelbecken zugeführt werden kann. Um hierbei gegebenenfalls den Nachweis führen zu können, daß die Beschaffenheit dieses Wassers den gesetzlichen Vorschriften entspricht, ist der Meßvorrichtung 52 eine Registriervorrichtung 55 zugeordnet, die die Zusammensetzung des Wassers aufzeichnet, beispielsweise auf einem Schreibstreifen. Die Registriervorrichtung 45 kann noch mit einer Steuereinrichtung versehen werden, durch die der Bodenauslaß 51 abgesperrt wird, sobald die Leichtstoffanteile im Wasser wiederum den vorgegebenen Grenzwert überschreiten.

Auch die Leichtstoffkammer 29 ist mit einem Bodenauslaß 56 versehen, durch den über ein nicht näher bezeichnetes Absperrventil die Leichtphase an eine hier nicht gezeigte Entsorgungseinrichtung abgegeben werden kann. Schließlich besitzt auch die Ölschlamm-Sammelkammer 31 einen Bodenauslaß 57, über die der Ölschlamm über eine Zweigleitung 58 an eine Entsorgungseinrichtung abgegeben werden kann. Es ist aber mit besonderem Vorteil möglich, den Inhalt der Ölschlamm-Sammelkammer 31 noch weiterhin zu entwässern, zu welchem Zweck der Bodenauslaß 57 über eine Förderleitung 59 und die bereits beschriebene Förderleitung 45 mit der Pumpe 21 verbunden werden kann, so daß der Ölschlamm gleichfalls über die 3-Phasen-Trennvorrichtung 10 geführt werden kann.

An die Saugseite der Pumpe 21 ist über ein Absperrventil 60 noch eine zweite Ansaugleitung 61 angeschlossen, über die mittels einer hier nicht dargestellten Saugdüse ein 2-Phasen- oder 3-Phasen-Gemisch aus den (ortsfesten) Sammelbehältern angesaugt werden kann, wenn das angesaugte Medium beispielsweise keine oder nur sehr geringe Anteile von gröberen Schwer- oder Feststoffen enthält.

Gemäß Figur 1 sind den einzelnen Kammern noch Füllstandsmeßvorrichtungen 62 zugeordnet, die jeweils aus einer nicht näher bezeichneten senkrechten Stange und aus einem darauf verschiebbaren Schwimmer 63 bestehen. Füllstandsmeßvorrichtungen dieser Art sind an sich bekannt; sie wirken mit einem nicht gezeigten Füllstands-Regler zusammen, der den Füllstand in den einzelnen Kammern begrenzt, so daß ein unbeabsichtigter Austritt von Flüssigkeit verhindert wird.

Den Figuren 5 und 6 ist zu entnehmen, daß die 3-Phasen-Trennvorrichtung 10 an Führungsschienen 64 aufgehängt ist, die sich im oberen Bereich der Hauptkammer 5 parallel zu deren Längsachse A-A erstrecken und sich über Knotenbleche 65 am Druckbehälter 2 abstützen. Die Trennkammern 10a bis 10e sind zu diesem Zweck mit Gleitkufen 66 versehen. Dadurch ist die 3-Phasen-Trennvorrichtung nach Art einer Schublade aus der Hauptkammer 5 herausziehbar, wenn deren Deckel 3 geöffnet ist. Der Füllstand F in der 3-Phasen-Trennvorrichtung 10 ist über ein Schauglas 67 zu beobachten (Figur 5). In den Figuren 5 und 6 sollen die kreuzschraffierten Flächen die Teildurchlässigkeit der Trennwände 6a und 6b der ersten Trennvorrichtung 6 andeuten.

In Figur 7 ist die Entleerungsphase der Hauptkammer 5 dargestellt, soweit es sich um den Austrag der Schwer- oder Feststoffe handelt. Der Deckel 3 besitzt einen Deckelflansch 3a, der druckdicht mit einem Kesselflansch 2a des Druckbehälters 2 zusammenwirkt. Darüber hinaus ist der Deckel 3 über eine Scharnierverbindung 68 mit dem Druckbehälter 2 verbunden. Die erste Trennvorrichtung 6 mit den Trennwänden 6a und 6b, die in diesem Falle geschlossen bzw. undurchlässig ausgeführt sind, ist durch eine Antriebsvorrichtung in Richtung auf den Kesselflansch 2a verschiebbar, wodurch die Schwerstoffe (durch kleine Kreise angedeutet) aus der Entleerungsöffnung 69 der Hauptkammer 5 ausgeschoben werden. Das Antriebselement 70 besteht in diesem Falle aus einer Zugstange 71, die über ein Gelenk 72 an einem Ausleger 73 des Deckels 3 befestigt ist. Auf diese Weise ist die erste Trennvorrichtung 6 zwangsläufig mit der Deckelbewegung gekoppelt, so daß auf einen besonderen Antrieb für die Trennvorrichtung 6 verzichtet werden kann. Es ist aber selbstverständlich möglich, auch die erste Trennvorrichtung 6 mit einem eigenen Antrieb zu versehen, der beispielsweise aus einem Hydraulikzylinder mit einer Kolbenstange bestehen kann.

Die Trennvorrichtung 6 läßt sich am Ende ihres Weges soweit aus der Hauptkammer 6 herausziehen, daß mindestens die hintere Trennwand 6a jenseits des Kesselflansches 2a liegt. Ist die Parallelführung 7 lang genug, so kann auch die vorderste Trennwand 6b aus dem Kesselflansch 2a herausgezogen werden. Alternativ oder zusätzlich ist es möglich, von einer oder beiden Trennwänden 6a, 6b über je eine Trennfuge je ein unterstes Segment 6c, 6d abzuteilen, das über ein Scharnier 86 mit waagrechter Achse gelenkig am größeren Teil der jeweiligen Trennwand 6a, 6b angebracht ist. Dadurch läßt sich der Schlammbereich in Richtung des Pfeils 87 ausspülen. Lediglich das vorderste Segment 6d ist in hochgeschwenkter Stellung gestrichelt dargestellt. Für das hinterste Segment 6c gelten gegebenenfalls analoge Überlegungen.

Figur 7 ist noch ergänzend zu entnehmen, daß die Oberkanten 85 der 3-Phasen-Trennvorrichtung 10 oberhalb des durch einen Regler begrenzten oberen Füllstandes FO der Hauptkammer 5 liegen. Auf diese Weise ist gewährleistet, daß keine Flüssigkeit aus dem Sandbereich 8 oder dem Schlammbereich 9 unkontrolliert in die 3-Phasen-Trennvorrichtung 10 eindringen kann. Der minimale Füllstand ist mit FU bezeichnet.

Figur 8 zeigt eine ortsfeste Abscheideanlage 74, wie sie beispielhaft in Tankstellenbetrieben verwendet wird. Die Abwässer gelangen über einen Zulauf 75 mit allen Verunreinigungen in einen sogenannten Sandfang 76, in dem sich der Schwerstoffanteil 77 (z.B. Sand) im Bodenbereich sammelt, während die wässrige Phase 78 darüber eine Schichtung bildet. Die auf der wässrigen Phase 78 schwimmende Leichtstoff-Phase fließt einschließlich Ölschlamm über einen Überlauf 79 in einen Öl-/Bezinabscheider 80, der in seinem unteren Bereich einen sogenannten Schlammfang 81 bildet, über dem sich eine Schichtung aus Wasser und Leichtstoffen aufbaut. Ein Zwischenbehälter 82 erleichtert die Trennung. Vom Öl-/Benzinabscheider 80 führt ein weiterer Überlauf 83 zu einem Speicherbecken 84, in dem entweder eine Emulsions-Spaltanlage oder ein Koaleszenz-Abscheider angeordnet sein kann. Für die Entsorgung einer derartigen Abscheideanlage wird bevorzugt, das im Anspruch 20 beschriebene Betriebsverfahren angewandt. Das Volumen des Sandfangs 76 ist mit beispielhaft 20 m³ deutlich größer als das Volumen des Öl-/Benzinabscheiders 80 mit beispielhaft 4 m³. Das gereinigte Wasser aus der Wasserkammer 27 wird nach vollendeter Reinigung des Öl-/Benzinabscheiders 80 kontinuierlich in diesen eingeleitet, wobei der überschießende (größere) Anteil über den Überlauf 83 abfließt.

Die Betätigung der einzelnen Ventile, deren Stellglieder pneumatisch angetrieben sind (durch ein "P" gekennzeichnet), erfolgt durch eine Zentralsteuerung, die auf die unterschiedlichen Verfahrensabläufe programmierbar ist; sogenannte "intelligente Steuerung".

## Patentansprüche

1. Aufbereitungsanlage, insbesondere als Fahrzeug, für die Trennung von 3-Phasen-Gemischen aus Wasser, Leichtstoffen (leichter als Wasser) und Schwerstoffen (schwerer als Wasser) mit einem Druckbehälter (2), in dem eine Hauptkammer (5) für die zumindest vorübergehende Aufnahme des 3-Phasen-Gemischs angeordnet ist, mit einer Trennvorrichtung (10) für die gravimetrische Abtrennung der Leichtstoffe vom Wasser, mit einer Leichtstoffkammer (29) für die Aufnahme der abgetrennten Leichtstoffe und mit einer Wasserkammer (27) für die Aufnahme des verbliebenen Wassers, sowie mit Förderleitungen (40, 43) für die Zufuhr der jeweils abgetrennten Phase zur vorgesehenen Kammer und mit mindestens einer Ansaugleitung (36, 61) für Leichtstoff/Wasser- und/oder Leichtstoff/Wasser/Schwerstoff-Gemische, wobei mindestens ein Teil der Kammern mit verschließbaren Auslaßöffnungen (47, 51, 57, 69) versehen ist, **dadurch gekennzeichnet,** daß die Trennvorrichtung (10) als 3-Phasen-Trennvorrichtung ausgebildet, mit einem Überlauf (11) für Leichtstoffe, mit einem Wasserauslaß (12) und mit mindestens einem steuerbaren Bodenauslaß (14) für Schwerstoffe versehen und innerhalb der Hauptkammer (5) zumindest teilweise oberhalb von deren Längsachse (A-A) angeordnet ist, und daß unterhalb der 3-Phasen-Trennvorrichtung (10) ein Sammelraum für Schwerstoffe vorhanden ist.

2. Aufbereitungsanlage nach Anspruch 1, **dadurch gekennzeichnet,** daß die Hauptkammer (5) in Richtung der Längsachse (A-A) durch eine weitere Trennvorrichtung (6) unterteilt ist, zwischen welcher und einem Deckel (3) der Sammelraum für die Schwerstoffe gebildet ist.

3. Aufbereitungsanlage nach Anspruch 2, **dadurch gekennzeichnet,** daß die Trennvorrichtung (6) als mindestens eine teildurchlässige Trennwand (6a, 6b) ausgebildet ist, durch die die Hauptkammer (5) in einen Sandbereich (8) und einen Schlammbereich (9) unterteilt ist.

4. Aufbereitungsanlage nach Anspruch 1, **dadurch gekennzeichnet,** daß der mindestens eine Bodenauslaß (14) der 3-Phasen-Trennvorrichtung (10) oberhalb des Sandbereichs (8) der Hauptkammer (5) angeordnet ist.

5. Aufbereitungsanlage nach Anspruch 2, **dadurch gekennzeichnet,** daß die weitere Trennvorrichtung (6) den unterhalb der 3-Phasen-Trennvorrichtung (10) liegenden Querschnitt der Hauptkammer (5) zumindest im wesentlichen ausfüllt und durch ein Antriebselement (70) in Richtung auf eine durch den Deckel (3) verschließbare Entleerungsöffnung (69) der Hauptkammer (5) verschiebbar ist.

6. Aufbereitungsanlage nach Anspruch 5, **dadurch gekennzeichnet,** daß das Antriebselement (70) fuhr die erste Trennvorrichtung (6) eine Zugstange (71) ist, die mit dem Deckel (3) der Hauptkammer (5) verbunden ist.

7. Aufbereitungsanlage nach Anspruch 1, **dadurch gekennzeichnet,** daß die 3-Phasen-Trennvorrichtung (10) aus einer Reihenanordnung von quaderförmigen Trennkammern (10a, 10b, 10c, 10d, 10e) besteht, in denen Pakete V-förmiger Trennelemente (13) angeordnet sind, deren mit Durchbrechungen (13a) versehene waagrecht verlaufende Scheitellinien nach oben gerichtet sind, und daß zumindest der überwiegende Teil der Trennkammern (10a, 10b, 10c) mit einem Bodenauslaß (14) versehen ist.

8. Aufbereitungsanlage nach Anspruch 7, **dadurch gekennzeichnet,** daß die Bodenauslässe (14) der Trennkammern (10a, 10b, 10c) mit steuerbaren Absperrvorrichtungen (14a) versehen sind.

9. Aufbereitungsanlage nach Anspruch 1, **dadurch gekennzeichnet,** daß die 3-Phasen-Trennvorrichtung (10) aus der Hauptkammer (5) herausziehbar an Führungsschienen (64) aufgehängt ist, die im oberen Bereich der Hauptkammer (5) parallel zu deren Längsachse (A-A) verlaufen.

10. Aufbereitungsanlage nach Anspruch 3, **dadurch gekennzeichnet,** daß die Eintrittsöffnung (16) der 3-Phasen-Trennvorrichtung (10) an deren deckelseitigem Ende angeordnet ist und daß der Überlauf (11) für die Leichtstoffe und der Wasserauslaß (12) am deckelfernen Ende angeordnet sind.

11. Aufbereitungsanlage nach Anspruch 3,**dadurch gekennzeichnet,** daß im Schlammbereich (9) der Hauptkammer (5) in Strömungsrichtung jenseits der letzten teildurchlässigen Trennwand (6b) eine verschließbare Bodenöffnung (26) angeordnet ist, die über eine Förderleitung (45) und eine Pumpe (21) mit der Eintrittsöffnung (16) der 3-Phasen-Trennvorrichtung (10) verbunden ist.

12. Aufbereitungsanlage nach Anspruch 1, **dadurch gekennzeichnet,** daß der Wasserauslaß (12) der 3-Phasen-Trennvorrichtung (10) durch eine Umschalt-Ventilanordnung (42) und zugehörige Förderleitungen (43, 44) wahlweise mit der Wasserkammer (27) oder über eine Pumpe (21) mit der Eintrittsöffnung (16) der 3-Phasen-Trennvorrichtung (10) verbindbar ist.

13. Aufbereitungsanlage nach Anspruch 12, **dadurch gekennzeichnet,** daß der Umschalt-Ventilanordnung (42) eine Meßvorrichtung (24) für den Leichtstoffgehalt im Wasser vorgeschaltet ist, durch die die Ventile in dem Sinne steuerbar sind, daß beim Unterschreiten eines vorgebbaren Grenzwerts für den Leichtstoffanteil das Wasser der Wasserkammer (27) und beim Überschreiten des Grenzwerts erneut der 3-Phasen-Trennvorrichtung (10) zugeführt wird.

14. Aufbereitungsanlage nach Anspruch 1, **dadurch gekennzeichnet,** daß die Oberkanten (85) der 3-Phasen-Trennvorrichtung (10) oberhalb des durch einen Regler begrenzten oberen Füllstandes (FO) der Hauptkammer (5) liegen.

15. Aufbereitungsanlage nach Anspruch 1, **dadurch gekennzeichnet,** daß eine als Saugrüssel ausgebildete erste Ansaugleitung (36) über dem Sammelraum für Schwerstoffe an die Hauptkammer (5) angeschlossen ist.

16. Aufbereitungsanlage nach Anspruch 1, **dadurch gekennzeichnet,** daß eine zweite Ansaugleitung (61) an eine Pumpe (21) angeschlossen ist, deren Druckseite über eine Steigleitung (20) unmittelbar mit der Eintrittsöffnung (16) der 3-Phasen-Trennvorrichtung (10) verbunden ist.

17. Aufbereitungsanlage nach Anspruch 15, **dadurch gekennzeichnet,** daß dem Druckbehälter (2) eine Ölschlamm-Sammelkammer (31) zugeordnet ist, in die eine absperrbare Zweigleitung (38) der ersten Ansaugleitung (36) einmündet.

18. Aufbereitungsanlage nach Anspruch 17, **dadurch gekennzeichnet,** daß die Ölschlamm-Sammelkammer (31) eine verschließbare Bodenöffnung (57) aufweist, die über eine Förderleitung (59) und eine Pumpe (21) mit der Eintrittsöffnung (16) der 3-Phasen-Trennvorrichtung (10) verbunden ist.

19. Aufbereitungsanlage nach Anspruch 1, **dadurch gekennzeichnet,** daß mindestens die Auslaßöffnung (51) der Wasserkammer (27) mit einer Meßeinrichtung (52) für mindestens eine der Größen Wassermenge, Leichtstoffgehalt versehen ist, und daß der Ausgang der Meßeinrichtung (52) einer Registriereinrichtung (55) aufgeschaltet ist.

20. Betriebsverfahren für die Aufbereitungsanlage nach einem oder mehreren der Ansprüche 1 bis 19 in Verbindung mit der Entsorgung des Inhalts von ortsfesten Abscheideanlagen (74), die als Sandfang (76) in Kombination mit einem Öl-/Benzinabscheider (80) mit Schlammfang (81) ausgebildet sind, **dadurch gekennzeichnet,** daß man
a) die Leichtstoffe aus dem Öl-/Benzinabscheider (80) mittels der Pumpe (21) über die zweite Ansaugleitung (61) absaugt, der 3-Phasen-Trennvorrichtung (10) zuführt und die Leichtstoffe der Leichtstoffkammer (29) und das Wasser der Wasserkammer (27) zuführt,
b) anschließend die wässrige Phase aus dem Öl-/Bezinabscheider (80) mittels der Pumpe (21) über die zweite Ansaugleitung (61) absaugt, der 3-Phasen-Trennvorrichtung (10) zuführt und die Leichtstoffe der Leichtstoffkammer (29) und das Wasser der Wasserkammer (27) zuführt,
c) anschließend den Ölschlamm aus dem Öl-/Benzinabscheider (80) mittels Unterdruck in der Hauptkammer (5) und mittels der ersten Ansaugleitung (36, Saugrüssel) und der Zweigleitung (38) der Öl-schlamm-Sammelkammer (31) zuführt,
d) den Öl-/Benzinabscheider (80) mittels einer Hochdruckpumpe (48) und Wasser aus der Wasserkammer (27) reinigt,
e) anschließend das verunreinigte Reinigungswasser aus Verfahrensschritt d) mittels der Pumpe (21) über die zweite Ansaugleitung (61) der 3-Phasen-Trennvorrichtung (10) zuführt und die Leichtstoffe in die Leichtstoffkammer (29), das Wasser in die Wasserkammer (27) und die Schwerstoffe über die Bodenauslässe (14, 25) der Hauptkammer (5) zuführt,
f) den Öl-/Benzinabscheider (80) mittels des zumindest weitgehend leichtstoff-freien Wassers aus der Wasserkammer (27) mindestens teilweise wieder auffüllt,
g) anschließend die wässrige Phase aus dem Sandfang (76) mittels der Pumpe (21) über die zweite Ansaugleitung (61) absaugt, der 3-Phasen-Trennvorrichtung (10) zuführt und die Leichtstoffe der Leichtstoffkammer (29), das Wasser über die Wasserkammer (27) zurück zum Öl-/Benzinabscheider (80) führt und die in der 3-Phasen-Trennvorrichtung (10) abgeschiedenen Schwerstoffe über Bodenauslässe (14, 25) der Hauptkammer (5) zuführt,
h) Schwerstoffe aus dem Sandfang (76) mittels Unterdruck in der Hauptkammer (5) und mittels der ersten Ansaugleitung (36, Saugrüssel) der Hauptkammer (5) zuführt,
i) den Sandfang (76) mittels der Hochdruckpumpe (48) und Wasser aus der Wasserkammer (27) reinigt,
j) anschließend das mit Sand und Sandschlamm verunreinigte Reinigungswasser aus Verfahrensschritt i) mittels Unterdruck in der Hauptkammer (5) und mittels der ersten Ansaugleitung (36, Saugrüssel) in die Hauptkammer (5) einbringt,
k) wobei beim Unterschreiten eines vorgegebenen Grenzwertes für den Leichtstoffanteil im Wasser dieses Wasser unmittelbar der Wasserkammer (27) zugeführt wird, und bei Überschreiten dieses Grenzwertes das Wasser erneut und gegebenenfalls wiederholt der 3-Phasen-Trennvorrichtung (10) zugeführt wird, bis der besagte Grenzwert schließlich unterschritten wird.
